(19) Europäisches Patentamt
European Patent Office
Office européen des brevets

(11) **EP 0 577 461 B1**

(12) **FASCICULE DE BREVET EUROPEEN**

(45) Date de publication et mention
de la délivrance du brevet:
**07.10.1998 Bulletin 1998/41**

(51) Int Cl.⁶: **G06K 7/10**

(21) Numéro de dépôt: **93401573.6**

(22) Date de dépôt: **21.06.1993**

(54) **Lecteur omnidirectionnel de vignettes de code à barre, à zone de lecture agrandie**

Omnidirektionaler Barkodeleser mit vergrösserter Lesezone

Omnidirectional bar code reader with magnified reading zone

(84) Etats contractants désignés:
DE GB IT

(30) Priorité: **01.07.1992 FR 9208088**

(43) Date de publication de la demande:
**05.01.1994 Bulletin 1994/01**

(73) Titulaire: **INTERMEC SCANNER TECHNOLOGY CENTER**
**31670 Labege Cédex (FR)**

(72) Inventeurs:
• **Massieu, Jean-Louis**
**F-82000 Montauban (FR)**
• **Thuries, Serge**
**F-31240 Saint-Jean (FR)**

(74) Mandataire: **CABINET BONNET-THIRION**
**12, Avenue de la Grande-Armée**
**75017 Paris (FR)**

(56) Documents cités:
EP-A- 0 344 364          EP-A- 0 414 281
DE-A- 2 208 459          FR-A- 1 192 907
US-A- 3 643 068          US-A- 4 699 447

## Description

L'invention se rapporte à un lecteur omnidirectionnel de vignettes de code à barre, comportant une source de faisceau lumineux parallèle fin, un déviateur dynamique adapté à faire décrire à ce faisceau, dans une zone plane de lecture où passe la vignette, un motif centré sur un axe général sensiblement normal à la zone, et un capteur photosensible avec un collecteur de lumière braqué sur la zone de lecture pour former, en réponse à une traversée longitudinale de la vignette par le motif, un signal correspondant au code à barre qu'elle porte, le déviateur comportant une optique de balayage centrée sur l'axe général et comprenant une couronne réfléchissante avec des facettes disposées en tronc de pyramide régulière, et, au centre de la couronne, un miroir en rotation à vitesse constante autour de l'axe général et frappé par le faisceau orienté suivant cet axe pour balayer consécutivement chaque facette de la couronne et former sur chacun un faisceau réfléchi qui décrit, dans la zone de lecture, un segment diamétral du motif.

Un tel lecteur omnidirectionnel est décrit dans US-A-4.699.447.

Le système de code à barre est très largement répandu pour présenter les références d'articles de toute nature sous une forme convenant à la lecture sur machine, afin d'identifier automatiquement ces références par lecture d'une vignette rectangulaire qui porte une succession d'éléments rectilignes transversaux alternativement foncés et clairs, de largeur multiple entier (entre 1 et 3 généralement) d'une largeur unité. La lecture se fait par balayage optique longitudinal de la vignette à vitesse approximativement constante, pour former un signal électrique correspondant à la référence codée portée par la vignette.

On a utilisé pour la lecture des sondes que l'on déplace à la main sur les vignettes ; la difficulté de la constance de vitesse de balayage les rend peu aisées à manier efficacement, sans reprendre le balayage plusieurs fois, et sont de réponse lente. Les lecteurs à balayage automatique sont de deux types principaux, des lecteurs dits à main et des lecteurs dits au passage.

Les lecteurs à main comportent une sonde avec une face d'entrée que l'on applique sur la vignette dans une orientation précise, une source d'éclairage non concentrée, et une optique qui projette l'image de la vignette placée contre la fenêtre d'entrée sur une barrette photosensible à exploration par balayage électrique (dispositifs à couplage de charge).

Parmi les lecteurs au passage, on distingue des lecteurs à la volée du type utilisé aux caisses des grandes surfaces, où la vignette défile sous le lecteur approximativement transversalement, et où un système de miroir tournant comportant plusieurs faces différemment inclinées, au centre d'une couronne réfléchissante à facettes, forme un motif comportant plusieurs réseaux parallèles différemment orientés. Ces lecteurs sont relativement tolérants sur la position de la vignette, mais peu tolérants sur l'orientation de celle-ci.

Les lecteurs omnidirectionnels, au domaine desquels appartient la présente invention, correspondent à la définition donnée en préambule. Le motif créé par le miroir tournant et la couronne réfléchissante à facettes est constitué d'autant de segments diamétraux que la couronne comporte de facettes, régulièrement espacés angulairement et se croisant en leur centre sur l'axe général. Ce motif sera dit ci-après à l'occasion motif rayonnant.

En fait les segments se croisent en un point sur l'axe général pour un plan particulier de la zone de lecture (plan médian) à distance déterminée de la couronne. Pour un plan qui s'écarte du plan médian, les segments sont tangents à un cercle inscrit. La profondeur de champ est déterminée par la condition que le diamètre du cercle inscrit soit petit devant la largeur de la vignette.

On aura compris que la lecture efficace de la vignette implique qu'un segment au moins du motif rayonnant traverse la vignette longitudinalement en coupant tous les éléments du code à barre porté par la vignette.

Cela implique que l'angle formé par deux segments diamétraux successifs soit inférieur à l'angle aigu que forment les diagonales du rectangle occupé par les éléments du code à barre, et que le point d'intersection de ces diagonales soit suffisamment proche du centre du motif. Cela impose donc une mise en place relativement précise de la vignette dans le lecteur.

On signalera en passant que, pour obtenir un signal à transitions nettes facilement identifiable par l'électronique associée, il est nécessaire que le diamètre du faisceau lumineux parallèle soit faible devant la largeur unité du code à barre. Normalement on utilise comme source un laser semiconducteur dans le rouge profond, autorisant une section suffisamment faible du faisceau avec une énergie suffisante.

La présente invention a pour objectif la réalisation d'un lecteur omnidirectionnel de code à barre qui accepte des imprécisions notables de localisation de la vignette tant dans le plan médian de la zone de lecture que par rapport à ce plan médian.

A cet effet, l'invention propose un lecteur omnidirectionnel de vignettes à code à barre, comportant une source de faisceau lumineux parallèle fin, un déviateur dynamique adapté à faire décrire à ce faisceau, dans une zone plane de lecture où passe la vignette, un motif centré sur un axe général sensiblement normal à la zone, et un capteur photosensible avec un collecteur de lumière braqué sur la zone de lecture pour former, en réponse à une traversée longitudinale de la vignette par le motif, un signal correspondant au code à barre qu'elle porte, le déviateur comportant au moins une optique de balayage centrée sur l'axe général et comprenant une couronne réfléchissante avec des facettes disposées en tronc de pyramide régulière et, au centre de la couronne, un miroir en rotation à vitesse constante autour de l'axe général, et frappé par le faisceau orienté suivant cet axe pour balayer consécutivement chaque facette de la couronne et former sur chacune un faisceau réfléchi qui décrit, dans le plan de lecture, un segment diamétral du motif, caractérisé en ce que le déviateur comprend, en amont de l'optique de balayage, un organe auxiliaire apte à former, à partir d'un trajet de faisceau incident, un trajet émergeant qui décrit, par rotation à vitesse lente devant celle du miroir de l'optique de balayage, un cône à faible ouverture, grâce à quoi le centre du motif créé par l'optique de balayage décrit, dans la zone de lecture, une courbe fermée centrée sur l'axe général, à ladite vitesse lente.

On conçoit que, dès lors que la disposition originale de l'invention amène le centre du motif rayonnant à décrire une courbe fermée au rythme de la rotation de l'organe auxiliaire, il suffira que le centre de la vignette séjourne à l'intérieur de la courbe fermée pendant une période de rotation de l'organe auxiliaire pour qu'au moins un segment du motif balaye correctement la vignette. Et la profondeur de champ est également considérablement augmentée en corollaire.

De préférence les vitesses de rotation du miroir d'optique de balayage et d'organe auxiliaire sont en cohérence, c'est-à-dire dans un rapport tel que le motif obtenu par combinaison du motif rayonnant, obtenu en une période de rotation du miroir d'optique de balayage, et du parcours de la courbe fermée par le centre du motif en une période de rotation de l'organe auxiliaire, soit stationnaire ou tout au moins quasi stationnaire.

De préférence les vitesses de rotation du miroir d'optique de balayage et d'organe auxiliaire sont dans un rapport défini par une fraction rationnelle. Si cette fraction rationnelle est $\frac{P}{Q}$ avec P et Q premiers entre eux (et P > Q), le motif combiné aura pour période Q fois celle de la rotation de l'organe auxiliaire.

En disposition préférée l'organe auxiliaire comprend un miroir tournant autour d'un axe moteur, une normale au miroir formant avec cet axe moteur un angle moitié du demi-angle au sommet du cône décrit par le trajet émergeant dans le plan passant par l'axe général et l'axe du faisceau émis par la source. En outre on préfère que le trajet incident tombe sur le miroir d'organe auxiliaire sensiblement sur l'axe moteur, avec une incidence d'environ 45°. Ainsi le sommet du cône est situé au centre du miroir, et la section droite du cône est une ellipse dont le rapport du grand au petit axe est $\sqrt{2}$.

Commodément, le cône décrit par le trajet émergeant présente un axe concourant avec l'axe général et sensiblement orthogonal à celui-ci, et l'optique de balayage comporte, au sommet de l'angle formé par ces deux axes un réflecteur plan dont la normale est bissectrice de cet angle. L'organe auxiliaire est ainsi dégagé de l'optique de balayage.

En outre il est intéressant que ce réflecteur plan comporte un avers réfléchissant, et que l'on dispose, en alignement avec l'axe du cône décrit par le trajet émergeant à l'opposé de l'organe auxiliaire une source lumineuse apte à définir, dans la zone de lecture après réflexion sur l'avers, un point lumineux sur l'axe général. Ce point lumineux sert de repère pour placer la vignette correctement.

Selon une disposition préférée de l'invention, le collecteur de lumière du capteur photosensible est constitué d'un guide de lumière apte à diriger tout rayon incident sur une face d'entrée jusqu'à un élément photosensible à une extrémité éloignée, par réflexions successives sur des parois. Un tel collecteur présente un comportement afocal.

On peut constituer un tel guide de lumière par un corps de révolution en matériau réfringent, allant se rétrécissant d'une face plane d'entrée jusqu'à l'élément photosensible. Ce corps de révolution peut être constitué par un paraboloïde, l'élément photosensible étant disposé dans le plan du foyer. On obtient ainsi un collecteur de lumière sensiblement afocal, à grande ouverture effective.

Des caractéristiques secondaires et des avantages de l'invention ressortiront d'ailleurs de la description qui va suivre, à titre d'exemple, en référence aux dessins annexés dans lesquels :

la figure 1 est une représentation schématique d'un lecteur omnidirectionnel selon l'invention ;
la figure 2 est une vue en coupe transversale d'un ensemble de déviation de lecteur omnidirectionnel ;
la figure 3 est une vue en élévation latérale montrant la disposition relative du déviateur et du collecteur de lumière.

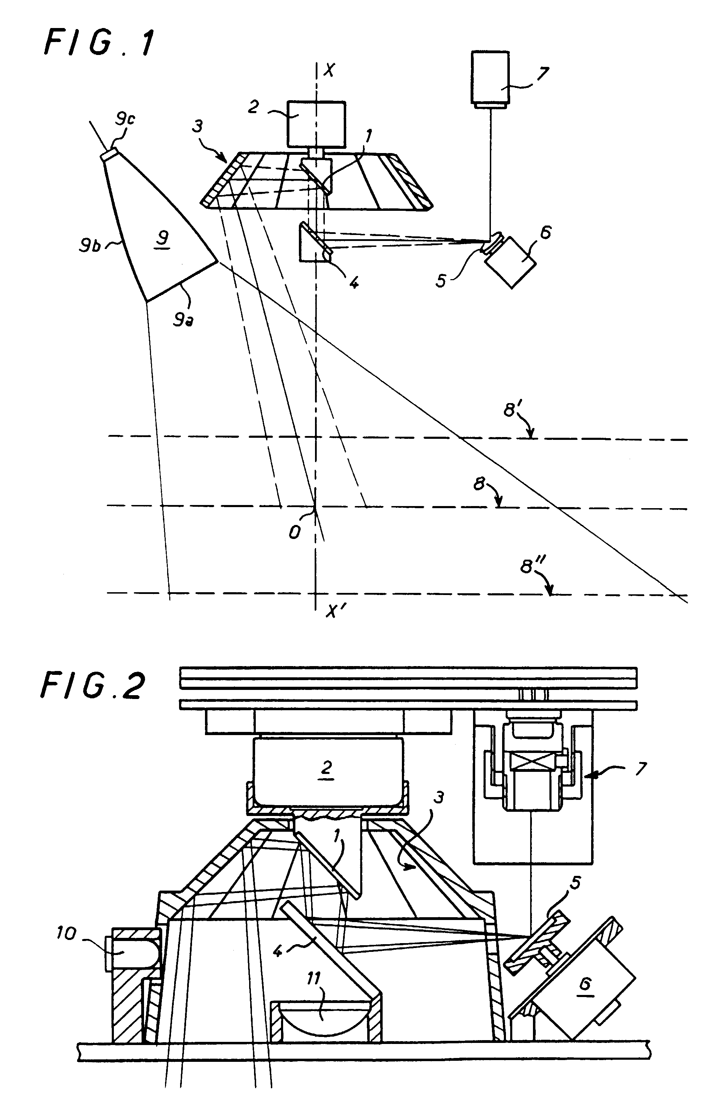

Selon le mode de réalisation de l'invention choisi et représenté figure 1, le lecteur omnidirectionnel de vignettes à code à barre est organisé avec un axe général X-X', normal à un plan de lecture 8 (qui coupe le plan de figure suivant une droite) qu'il perce en un centre O, qui sera dit centre de lecture. De façon idéale, la vignette sera présentée dans ce plan, faisant face du côté X de l'axe X-X', et avec son centre en coïncidence avec le centre de lecture O dans le plan 8.

L'axe X-X' n'est pas nécessairement vertical, et peut en fait prendre toute orientation appropriée normale au plan dans lequel se présentera la vignette. L'axe X-X', par exemple, sera horizontal si la vignette est collée au flanc d'un emballage parallélépipédique. Cependant, pour la facilité de la description, celle-ci sera faite en réputant vertical l'axe X-X' et horizontal le plan de lecture 8, et le lecteur au-dessus de la vignette.

Un miroir plan 1, orienté à 45° de l'axe X-X', est entraîné en rotation autour de cet axe X-X' par un moteur 2, de telle façon qu'un faisceau parallèle étroit de lumière assimilable à un rayon, et dirigé de bas en haut suivant cet axe soit renvoyé dans un plan normal à l'axe, en tournant autour de cet axe à la vitesse du miroir 1.

Autour du miroir tournant 1 est disposée une couronne 3 de facettes réfléchissantes, au nombre de 13, et arrangées suivant les faces d'une pyramide régulière, avec une base perpendiculaire à l'axe X-X' constituée d'un tridécagone régulier. L'angle d'inclinaison de chaque médiane de facette sur l'axe X-X' est tel qu'un rayon tombant sur le miroir 1 suivant l'axe X-X' et réfléchi par ce miroir normalement à cet axe en direction de la médiane de facette, soit à nouveau réfléchi par la facette pour passer par le centre O. Cet ensemble du miroir tournant 1 et de la couronne à facettes 3 sera dit optique de balayage.

Lors de la rotation du miroir, le rayon réfléchi par le miroir 1 balaye successivement toutes les facettes de la couronne 3. Le rayon réfléchi par une facette provenant d'un rayon incident en rotation dans un plan normal à l'axe X-X' va décrire, dans le plan de lecture 8, un segment de droite passant par le centre O, et dirigé parallèlement à l'intersection de la facette par le plan normal à l'axe X-X'. Le motif complet est donc une étoile, centrée sur O, et constituée de 13 diamètres régulièrement répartis angulairement d'un cercle centré sur 0, soit 26 branches.

Si l'on dispose une vignette dans le plan de lecture 8 avec son centre coïncidant avec le centre de lecture O, un des diamètres ou paire de branches au moins du motif étoilé balayera la vignette sur toute sa longueur. Selon que les éléments transversaux sont clairs et fortement réflecteurs, ou foncés et peu réflecteurs, la quantité de lumière réfléchie diffuse reçue par un collecteur de lumière 9 et transmise à un élément photosensible 9c sera forte ou faible. L'élément photosensible élaborera un signal électrique à niveaux élevés ou bas, image du code de la vignette. Des logiciels appropriés reconnaîtront les signaux complets image du code de la vignette de signaux tronqués résultant de balayages obliques.

Cette disposition, telle qu'on vient de la décrire, est connue et largement utilisée. Mais elle a l'inconvénient que, pour que la lecture soit correcte, il faut que le centre de la vignette soit très proche du centre O de lecture. Un écart dans le plan de lecture peut avoir pour résultat qu'aucune paire de branches du motif ne balaye la vignette sur toute sa longueur. Et, si la vignette est présentée dans des plans, parallèles au plan de lecture, soit en deçà (8'), soit au-delà (8") de ce plan de lecture, il est apparent que le centre de chaque segment sera décalé par rapport à l'axe, le segment restant parallèle au segment dans le plan de lecture. Les segments seront donc tangents à un cercle centré sur l'axe X-X'. Les motifs obtenus dans ces plans ne seront efficaces que si le décalage du centre de la vignette par rapport à l'axe et l'orientation de la vignette sont corrélés.

Selon l'invention, un miroir fixe 4 est disposé à 45° de l'axe X-X', intersectant cet axe sensiblement en son centre, et situé entre le miroir 1 qui sera dit miroir principal et le plan de lecture 8. Un projecteur de faisceau laser 7 délivre un faisceau parallèle dont le diamètre de section est petit devant la largeur unité des éléments transversaux de code à barre sur les vignettes, afin que les signaux présentent des transitions nettes. Le faisceau laser, émis dans le rouge profond, est dirigé parallèlement à l'axe X-X' de sorte que l'axe du faisceau émis par le projecteur 7 définisse avec l'axe X-X' un plan qui va contenir la normale au miroir 4, et l'axe de rotation d'un moteur 6 de miroir auxiliaire 5. Dans ce plan le faisceau émis par 7 est orthogonal et concourant avec une normale à l'axe X-X' issue du miroir 4 au point où l'axe X-X' perce ce miroir 4, et l'axe du moteur 6 constitue la bissectrice de l'angle droit formé par le faisceau émis par le projecteur 7 et de la normale à l'axe X-X' issue du miroir 4. Au sommet de cet angle droit est disposé, entraîné par l'axe du moteur 6, un miroir auxiliaire plan 5, dont la normale fait un angle α de quelques degrés avec l'axe du moteur 6.

On comprend que, si l'angle α était nul, le faisceau émis par le projecteur 7 serait réfléchi par le miroir auxiliaire 5 suivant la normale à l'axe X-X' pour, après réflexion sur le miroir 4, se diriger vers le miroir principal 1 suivant cet axe X-X'. Du fait que l'angle α n'est pas nul, la trajectoire du faisceau réfléchi par le miroir 5 va décrire les génératrices d'un cône à directrice elliptique. Le demi-angle au sommet pour le grand axe dans le plan passant par l'axe X-X' et l'axe du faisceau émis par le projecteur 7 étant $2\,\alpha$, tandis que par le petit axe, il est de $\sqrt{2}\,\alpha$.

Suite aux réflexions sur le miroir fixe 4, le miroir tournant 1 et la couronne à facettes 3, le centre du motif étoilé va décrire, dans le plan de lecture 8, au rythme du moteur 6, une courbe fermée sensiblement elliptique correspondant à l'intersection du cône, après triple réflexion, par le plan de lecture. Le motif étoilé lui-même sera un peu altéré par les réflexions successives, mais en conservera le caractère essentiel.

On comprend que, en première approximation, si le centre de la vignette se trouve situé à l'intérieur de l'ellipse décrite par le centre du motif étoilé, au moins un segment du motif complet passera longitudinalement d'une extrémité à l'autre de la vignette. Par motif complet, on entendra l'ensemble des motifs étoilés distincts décrits, entre deux instants successifs où les deux miroirs, principal 1 et auxiliaire 5, prennent simultanément la même position respective.

Par ailleurs, l'utilisation du miroir auxiliaire 5 augmente la profondeur de champ. Dans un plan 8' plus proche de la couronne 3 que le plan de lecture 8, ainsi que dans un plan 8" plus éloigné de cette couronne, le centre du motif décrit des ellipses qui entourent le point où l'axe principal perce ces plans 8' et 8", de sorte que la probabilité d'un balayage efficace de la vignette, centrée à peu de distance de l'axe X-X', reste très élevée.

Pour donner des ordres de grandeur, avec un angle α de 2,5°, une vitesse de rotation du miroir principal 1 de 100 tr/s et une vitesse de rotation du miroir auxiliaire 5 de 20 tr/s, à raison de 13 segments par tour du miroir principal 1, on aura 65 segments par tour du miroir auxiliaire ; on notera que, après un tour du miroir auxiliaire 5, le miroir principal 1 a fait exactement 5 tours, et les deux miroirs se retrouvent dans les mêmes positions respectives. On peut définir une période de récurrence du motif complet, alors égale à 50 ms.

On peut augmenter le nombre total de segments du motif entier, en modifiant le rapport des vitesses des moteurs principal 2 et auxiliaire 6 pour qu'il soit, non plus un nombre entier, mais une fraction rationnelle ; pour que simultanément les deux miroirs se retrouvent dans leur position d'origine, il faudra que le miroir principal 1 ait effectué un nombre de tours égal au plus petit commun multiple des termes de la fraction (réduite pour que ces termes soient premiers entre eux, bien sûr). Par exemple, en choisissant une fraction 11/2, le moteur principal 2 tournera à 110 tr/s, et le moteur auxiliaire à 20 tr/s. La période de récurrence passe à 100 ms, et le nombre de segments du motif complet à 130. Dans la pratique, le moteur principal 2 sera un moteur synchrone à rotor à aimants permanents, et le moteur 6 sera un moteur pas à pas. Une base de temps avec des diviseurs appropriés pilotera les deux moteurs en cohérence.

Le collecteur de lumière 9 est constitué par un bloc de matière réfringente d'indice n, limité latéralement par un paraboloïde de révolution 9b, autour d'un axe qui percera le plan 8 au centre O, et par une face d'entrée 9a, normale à l'axe du paraboloïde 9b. Cette paroi 9b possède un poli miroir, de sorte qu'elle produise une réflexion totale pour un angle d'incidence supérieur à Arc sin $\frac{1}{n}$ . L'élément photosensible 9c est situé dans un plan normal à l'axe du paraboloïde et contenant le foyer de ce paraboloïde. Les rayons incidents sur la face d'entrée 9a subissent une réfraction qui diminue l'angle qu'ils font avec la direction axiale du collecteur 9, puis parviennent à l'élément 9c après un nombre de réflexions relativement réduit, fonction de l'angle d'incidence. (A incidence normale, une seule réflexion). Le collecteur de lumière possède donc une très grande ouverture angulaire, et ne présente pratiquement pas d'effet de focalisation, pour être aussi peu sensible que possible à la distance de la vignette.

La longueur d'onde du faisceau, produit dans le projecteur 7 par une diode laser semi-conductrice, est choisie dans le rouge, c'est-à-dire une longueur d'onde dans le spectre visible, mais vers son extrémité à grande longueur d'onde. On obtient ainsi économiquement une puissance lumineuse suffisante, et l'on peut éliminer par filtrage une bonne partie de la lumière ambiante, génératrice de bruit sur l'élément photosensible 9c. Mais on évite que le support de vignette et l'encre pour l'impression des éléments foncés aient des comportements optiques (absorption et réflexion) différents du comportement pour la lumière visible, comme ce pourrait être le cas pour de l'infrarouge.

Néanmoins, en raison des vitesses de balayage et du nombre de segments, le motif n'est pas visible sur une surface où se placerait la vignette. Or, pour éviter de sortir du champ utile du déviateur, il est intéressant de matérialiser le centre O du plan de lecture.

Si l'on se reporte à la figure 2, on voit que le miroir fixe 4 est une lame à faces parallèles avec ses deux faces réfléchissantes. Dans l'alignement de l'axe du cône engendré par le miroir auxiliaire 5, et du côté opposé à ce miroir 5 par rapport au miroir fixe 4, est disposée une diode électroluminescente verte 10. Le faisceau lumineux créé par cette diode 10 se réfléchit sur l'avers du miroir 4, son axe, après réflexion, coïncidant avec l'axe principal X-X' de la figure 1. Une lentille 11 va focaliser le faisceau réfléchi sur le centre O du plan de lecture. Compte tenu que la distance de la lentille 11 au centre O du plan de lecture est grande devant le trajet parcouru par le faisceau entre la diode 10 et la lentille 11, l'image de la diode 10 présentera une grande profondeur de champ. Ainsi le faisceau émergeant de la lentille 11 matérialisera l'axe principal X-X' de façon suffisante sur toute la profondeur de champ du déviateur, entre les plans 8' et 8" (figure 1), en déterminant sur un plan de lecture une petite tache verte sur laquelle il sera aisé de centrer, au moins approximativement, la vignette à décoder.

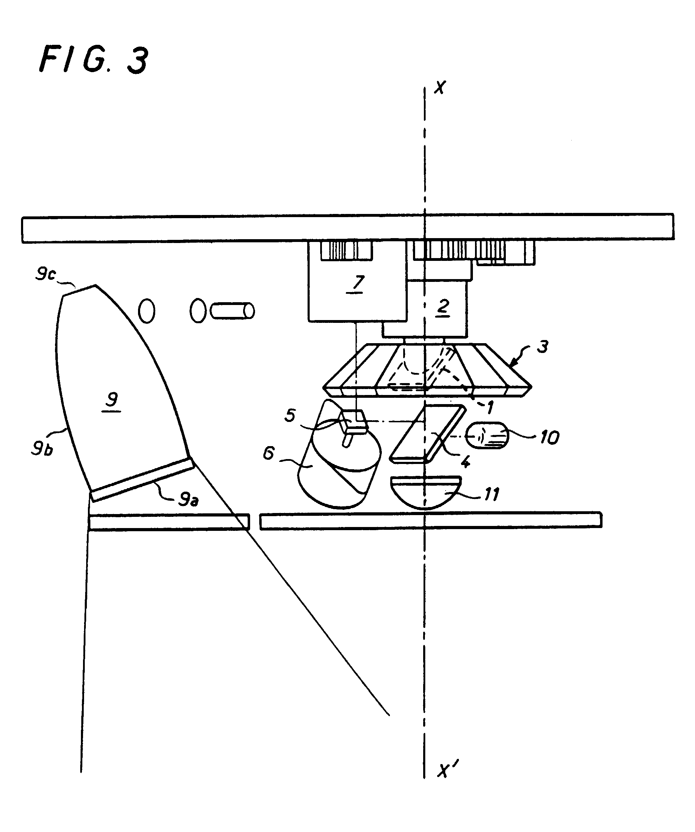

En raison du caractère schématique de la figure 1, en vue de la clarté de l'exposé, les dimensions relatives des différents éléments du lecteur n'ont pas été respectés. De plus le collecteur de lumière 9 a été représenté dans le même plan que le projecteur de faisceau laser et le miroir auxiliaire 5. La figure 3, qui est une vue latérale du lecteur, fait apparaître que le plan passant par l'axe X-X' et l'axe du collecteur de lumière 9 forme un angle dièdre d'environ 60° avec le plan passant par l'axe principal X-X' et l'axe du projecteur 7, le centre du miroir auxiliaire 5 et la diode 10, pour des raisons d'encombrement.

Comme il a déjà été signalé en passant, l'axe X-X' (figure 1) peut être vertical, avec un plan de lecture horizontal. Mais l'ensemble déviateur constitué des miroirs 1, 4 et 5 et de la couronne 3 et le collecteur 9, avec une électronique associée, peuvent être rassemblés sous forme d'un projecteur compact monté orientable sur un pied, pour s'adapter à des plans de lecture de toutes orientations souhaitables.

Bien entendu, l'invention n'est pas limitée à l'exemple décrit, mais en embrasse toutes les variantes d'exécution, dans le cadre des revendications. Notamment le nombre des facettes de la couronne 3, l'orientation de l'axe du moteur 6 conjointement avec la position et l'orientation du projecteur de faisceau laser sont modifiables, ainsi que la constitution du collecteur de lumière.

## Revendications

1. Lecteur omnidirectionnel de vignettes à code à barre, comportant une source de faisceau lumineux parallèle fin (7), un déviateur dynamique (1, 3, 4) adapté à faire décrire à ce faisceau, dans une zone plane de lecture (8) où passe la vignette, un motif centré sur un axe général (X-X') sensiblement normal à la zone (8), et un capteur photosensible (9c) avec un collecteur de lumière (9) braqué sur la zone de lecture pour former, en réponse à une traversée longitudinale de la vignette par le motif, un signal correspondant au code à barre qu'elle porte, le déviateur comportant au moins une optique de balayage (1, 3, 4) centrée sur l'axe général (X-X') et comprenant une couronne réfléchissante (3) avec des facettes disposées en tronc de pyramide régulière et, au centre de la couronne (3), un miroir (1) en rotation à vitesse constante autour de l'axe général (X-X'), et frappé par le faisceau orienté suivant cet axe pour balayer consécutivement chaque facette de la couronne (3) et former sur chacun un faisceau réfléchi qui décrit, dans le plan de lecture, un segment diamétral du motif, caractérisé en ce que le déviateur comprend, en amont de l'optique de balayage (1, 3, 4), un organe auxiliaire (5) apte à former, à partir d'un trajet de faisceau incident, un trajet émergeant qui décrit, par rotation à vitesse lente devant celle du miroir (1) de l'optique de balayage, un cône à faible ouverture, grâce à quoi le centre du motif créé par l'optique de balayage décrit, dans la zone de lecture, une courbe fermée centrée sur l'axe général (X-X'), à ladite vitesse lente.

2. Lecteur selon la revendication 1, caractérisé en ce que les vitesses de rotation du miroir d'optique de balayage (1) et d'organe auxiliaire (5) sont en cohérence.

3. Lecteur selon la revendication 2, caractérisé en ce que les vitesses de rotation du miroir d'optique (1) de balayage et d'organe auxiliaire (5) sont dans un rapport défini par une fraction rationnelle.

4. Lecteur selon une quelconque des revendications 1 à 3, caractérisé en ce que l'organe auxiliaire comprend un miroir (5) entraîné en rotation autour d'un axe moteur (6), une normale au miroir formant avec cet axe moteur un angle ($\alpha$) moitié du demi-angle au sommet du cône décrit par le trajet émergeant, dans le plan passant par l'axe général (X-X') et l'axe du faisceau émis par la source (7).

5. Lecteur selon la revendication 4, caractérisé en ce que le trajet incident tombe sur le miroir (5) d'organe auxiliaire sensiblement sur l'axe moteur, avec une incidence sur cet axe d'environ 45°.

6. Lecteur selon l'une des revendications 4 et 5, caractérisé en ce que le cône décrit par le trajet émergeant présente un axe concourant avec l'axe général (X-X') et sensiblement orthogonal à celui-ci, l'optique de balayage comportant, au sommet de l'angle formé par ces deux axes, un réflecteur plan (4) dont la normale est bissectrice de cet angle.

7. Lecteur selon la revendication 6, caractérisé en ce que ledit réflecteur plan (4) étant situé entre le miroir tournant (1) d'optique de balayage et la zone de lecture, ce réflecteur comporte un avers réfléchissant, et en ce que le lecteur comporte, dans l'alignement de l'axe du cône décrit par le trajet émergeant de l'organe auxiliaire (5), et à l'opposé de cet organe, une source lumineuse (10) apte à définir, dans la zone de lecture, après réflexion sur l'avers du réflecteur (4), un point lumineux sur l'axe général (X-X').

8. Lecteur selon une quelconque des revendications 1 à 7, caractérisé en ce que le collecteur de lumière du capteur photosensible est constitué d'un guide de lumière (9), apte à diriger tout rayon incident sur une face d'entrée (9a), par réflexions successives sur des parois (9b), jusqu'à un élément photosensible (9c).

9. Lecteur selon la revendication 8, caractérisé en ce que le guide de lumière est constitué par un corps de révolution (9) autour d'un axe en matériau réfringent, allant se rétrécissant d'une face plane d'entrée (9a) jusqu'à l'élément photosensible (9c).

10. Lecteur selon la revendication 9, caractérisé en ce que le corps de révolution (9) est limité latéralement par un paraboloïde (9b), l'élément photosensible (9c) étant disposé dans le plan du foyer.

**Patentansprüche**

1. Omnidirektionaler Barkodeleser, bestehend aus einer Lichtquelle mit feingebündeltem Parallelstrahl (7), einer dynamischen Ablenkeinheit (1,3,4), die so ausgeführt ist, daß Markierung bzw. das Etikett durchläuft, ein zentrisches Strahlenmuster um eine Hauptachse (X-X') beschreibt, die genau senkrecht auf dem Bereich (8) steht, und einem lichtempfindlichen Aufnehmer (9c) mit einer auf den Abtastbereich gerichteten Empfangsoptik (9), der in Reaktion auf die Längsbewegung der Markierung durch das Strahlenmuster ein Signal entsprechend dem darauf befindlichen Barkode erzeugt, wobei die Ablenkeinheit mindestens eine optische Ablenkanordnung (1,3,4) umfaßt, die zentrisch zur Hauptachse (X-X') angeordnet ist, und die einen reflektierenden Kranz (3) mit in Form eines regelmäßigen Pyramidenstumpfes angeordneten Einzelflächen enthält, wobei im Zentrum des Kranzes (3) ein Spiegel (1) mit konstanter Geschwindigkeit um die Hauptachse (X-X') rotiert, der von dem längs dieser Achse ausgerichteten Strahl getroffen wird, so daß dieser nacheinander nach jede Einzelfläche des Kranzes (3) überstreicht und dabei von jeder ein reflektierter Strahl ausgeht, der in der Abtastebene ein diametrales Segment des Strahlenmusters beschreibt, dadurch **gekennzeichnet**, daß vor der optischen Ablenkeinrichtung (1,3,4) eine Hilfsanordnung (5) eingeschaltet ist, die geeignet ist, aus einem einfallenden Strahl einen reflektierten Strahl zu bilden, der durch eine gegenüber der des Spiegels (1) der optischen Ablenkeinheit langsame Rotation einen Kegel mit kleinem Öffnungswinkel beschreibt, durch den wiederum das Zentrum des von der optischen Ablenkeinheit erzeugten Strahlenmusters im Abtastbereich eine zur Hauptachse (X-X') zentrische geschlossene Kurve beschreibt, die mit der besagten langsamen Rotationsgeschwindigkeit durchlaufen wird.

2.  Leser nach Anspruch 1, dadurch **gekennzeichnet**, daß die Rotationsgeschwindigkeiten des Spiegels der optischen Ablenkeinheit (1) und der Hilfsanordnung (5) übereinstimmen.

3.  Leser nach Anspruch 2, dadurch **gekennzeichnet**, daß die Rotationsgeschwindigkeiten des Spiegels der optischen Ablenkeinheit (1) und der Hilfsanordnung (5) in einem durch einen rationalen Bruch festgelegten Verhältnis stehen.

4.  Leser nach einem der Ansprüche 1 bis 3, dadurch **gekennzeichnet**, daß die Hilfsanordnung einen Spiegel beinhaltet, der um eine Motorachse (6) rotiert, wobei eine Normale auf den Spiegel mit der Motorachse einen Winkel ($\alpha$) einschließt, welcher der Hälfte des halben Scheitelwinkels des durch den reflektierten Strahl beschriebenen Kegels in der durch die Hauptachse (X-X') und die Achse des von der Strahlenquelle (7) ausgehenden Strahles liegenden Ebene entspricht.

5.  Leser nach Anspruch 4, dadurch **gekennzeichnet**, daß der Weg des einfallenden Lichts genau in der Motorachse auf den Spiegel (5) der Hilfsanordnung trifft, wobei die Neigung gegenüber dieser Achse bei etwa 450 liegt.

6.  Leser nach einem der Ansprüche 4 oder 5, dadurch **gekennzeichnet**, daß der vom reflektierten Lichtstrahl beschriebene Kegel eine Achse aufweist, die mit der Hauptachse (X-X') durch einen Punkt geht und genau senkrecht auf dieser steht, wobei die optische Ablenkeinrichtung am Scheitel des durch diese beiden Achsen gebildeten Winkels einen ebenen Reflektor (4) beinhaltet, dessen Normale die Winkelhalbierende dieses Winkels bildet.

7.  Leser nach Anspruch 6, dadurch **gekennzeichnet**, daß der ebene Reflektor (4) zwischen dem rotierenden Spiegel (1) der optischen Ablenkeinheit und dem Abtastbereich angeordnet ist, wobei dieser Reflektor eine reflektierende Vorderseite besitzt, und weiter dadurch **gekennzeichnet**, daß der Leser eine in der Achse des durch den von der Hilfsanordnung (5) reflektierten Strahl beschriebenen Kegels und gegenüber dieser Hilfsanordnung angeordnete Lichtquelle (10) beinhaltet, die geeignet ist, nach der Reflexion auf der Vorderseite des Reflektors (4) einen auf der Hauptachse (X-X') liegenden Leuchtpunkt im Abtastbereich zu erzeugen.

8.  Leser nach einem der Ansprüche 1 bis 7, dadurch **gekennzeichnet**, daß die Empfangsoptik des lichtempfindlichen Aufnehmers durch einen Lichtleiter (9) gebildet wird, der geeignet ist, sämtliche auf die Eintrittsfläche (9a) auftreffenden Strahlen durch wiederholte Reflexion an den Wänden (9b) einem lichtempfindlichen Element (9c) zuzuleiten.

9.  Leser nach Anspruch 8, dadurch **gekennzeichnet**, daß der Lichtleiter durch einen achsensymmetrischen Rotationskörper (9) aus lichtbrechendem Material gebildet wird, der sich von einer ebenen Eintrittsfläche (9a) bis zum lichtempfindlichen Element (9c) verjüngt.

10. Leser nach Anspruch 9, dadurch **gekennzeichnet**, daß die Außenseite des Rotationskörpers (9) durch eine Paraboloidfläche (9b) gebildet wird, wobei das lichtempfindliche Element (9c) in der Ebene des Brennpunkts angeordnet ist.

**Claims**

1.  An omnidirectional bar code label scanner comprising a source producing a thin parallel light beam (7), a dynamic deviator (1, 3, 4) adapted to scan the said beam, in a plane scanning area (8) through which the label passes, in a pattern centred on a main axis (X-X') substantially normal to the area (8), and a photosensor ($9\underline{c}$) with a light collector (9) aimed at the scanning area to generate, when the pattern passes longitudinally over the label, a signal corresponding to the bar code that it carries, the deviator comprising at least one scanning optics system (1, 3, 4) centred on the main axis (X-X') and comprising a reflective ring (3) with facets arranged in a frustrum of a regular pyramid and, at the centre of the ring (3), a mirror (1) rotating at a constant speed about the main axis (X-X') on which the beam impinges along the said axis so as to scan each facet of the ring (3) consecutively and to form at each a reflected beam which, in the scanning plane, traces a diametral segment of the pattern, characterized in that the said deviator comprises on the upstream side of the scanning optics system (1, 3, 4) an auxiliary element (5) adapted to produce from an incident light beam path an emergent path which, by virtue of rotation at a speed which is slow relative to that of the scanning optics mirror (1), traces out a narrow aperture cone, as a result of which the centre of the pattern created by the scanning optics system traces out in the said scanning area, at the said slow speed, a closed curve centred on the said main axis (X-X').

2. A scanner according to claim 1, characterized in that the rotation speeds of the said scanning optics mirror (1) and the said auxiliary element (5) are coherent.

3. A scanner according to claim 2, characterized in that the rotation speeds of the said scanning optics mirror (1) and the said auxiliary element (5) are in a ratio which is a rational fraction.

4. A scanner according to any one of claims 1 to 3, characterized in that the auxiliary element comprises a mirror (1) entrained in rotation about a drive axis (6), the angle ($\alpha$) between a normal to the said mirror and the said drive axis being equal to half the half-angle at the summit of the cone traced out by the said emergent path in the plane passing by the main axis (X-X') and the beam axis emitted by the source (71)

5. A scanner according to claim 4, characterized in that the incident path impinges on the said auxiliary element mirror (5) substantially on the said drive axis, with an angle of incidence to the said axis of approximately 45°.

6. A scanner according to one of claims 4 or 5, characterized in that the cone traced out by the said emergent path has an axis intersecting and substantially orthogonal to the main axis (X-X'), the said scanning optics comprising at the summit of the angle defined by the said two axes a plane reflector (4) the normal to which bisects the said angle.

7. A scanner according to claim 6, characterized in that the said plane reflector (4) is disposed between the said rotating mirror (1) of the scanning optics and the said scanning area, the said reflector comprises a reflective obverse side and the said scanner comprises, aligned with the axis of the cone traced out by the said emergent path from the said auxiliary element (5), and opposite the said element, a light source (10) adapted to define a light spot on the said main axis (X-X') in the said scanning area after reflection from the said obverse side of the reflector (4).

8. A scanner according to any one of claims 1 to 7, characterized in that the said light collector of the said photosensor is constituted by an optical waveguide (9) adapted to direct any light ray impinging on an entry face (9a) to a photosensor (9c) by successive reflections from its walls (9b).

9. A scanner according to claim 8, characterized in that the said optical waveguide is constituted by a body of revolution (9) about an axis, is made of refractive material and decreases in size from a plane entry face (9a) to the said photosensor (9c).

10. A scanner according to claim 9, characterized in that the said body of revolution (9) is delimited laterally by a paraboloid (9b) and the said photosensor (9c) is disposed in its focal plane.

## F I G . 1

## F I G . 2

# FIG. 3